# EUROPÄISCHE PATENTANMELDUNG

(11) **EP 0 869 601 A2**
(43) Veröffentlichungstag der Anmeldung: **07.10.1998**
(21) Anmeldenummer: 98108755.4
(22) Anmeldetag: 19.09.1995
(51) Int. Cl.: H02K 16/00

(54) **Motoranordnung**

(30) Priorität: 22.09.1994 RO 9401551; 25.04.1995 RO 9500800
(62) Teilanmeldung aus: 95932980.6
(71) Anmelder: Lungu, Iancu, 74381 Bukarest 3 (RO)
(72) Erfinder: Lungu, Iancu, 74381 Bukarest 3 (RO)
(74) Vertreter: Richter, Werdermann & Gerbaulet

(57) **Zusammenfassung**

Um einen elektronisch kommutierten Motor zu verbessern, wird vorgeschlagen, daß ein Rotor (12) und ein Außenrotor (11, 112, 113) vorgesehen sind, wobei Rotor (12) und Außenrotor (11, 112, 113) aus gewickelten Jochen (11) mit einem Träger (S) zusammengebaut sind und sich zum Erzeugen jeweils eines Teils der nutzbaren Motorleistung in entgegengesetzter Richtung drehen, wobei das Joch (11) in Axialrichtung einer zugeordneten Welle (52) an lediglich einer Seite mit der Welle (52) verbunden ist.

## Beschreibung

Die Erfindung betrifft einen elektronisch kommutierten Motor. Die EP-A-0500 963 betrifft einen elektronisch kommutierten Reluktanzmotor mit gewickelten, magnetisch voneinander getrennten Jochen zur Erzeugung eines pulsierenden Magnetfeldes und mit einem gegenüber den Jochen drehbaren Rotor mit von den Polen der Joche anziehbaren Rotorpolen, wobei diese Anziehung in Abhängigkeit von der Stellung der Rotorpole gegenüber den Polen der gewickelten Joche gegenüber den Polen der gewickelten Joche elektronisch steuerbar ist, wobei mindestens eine Wicklung eines Jochs durch einen Leistungshalbleiter in Reihe mit einer Gleichspannungsquelle schaltbar und der Leistungshalbleiter in Abhängigkeit von der Stellung der Rotorpole gegenüber den Polen der Joche steuerbar ist, wobei die Pole der gewickelten Joche sowie die des Rotors paarweise und diametral symmetrisch gegenüber der Drehwelle des Motors angeordnet sind und wobei sich zwischen den Rotorpolen des Rotors nicht-magnetische Lücken befinden und die Rotorpole durch ein Joch verbunden sind.

Die Veröffentlichung PATENT ABSTRACTS OF JAPAN Vol. 009, no. 065 (E-304), 26 March 1985 & JP,A 59204451 (TOKYO DENKI KK) 9 November 1984, beschreibt einen Elektromotor, bei dem sowohl der Rotor und der aus einem gewickelten Joch bestehenden Außenrotor sich in entgegengesetzten Richtungen drehen und dabei jeweils einen Teil der nutzbaren Motorleistung erzeugen.

Aus "European Transactionen Electrical Power Energeeing", Vol 3, Nr. 4, 1 Juli 1993, Seiten 265-277, ist ein Reluktanzmotor mit einer größeren Anzahl von Polen und Phasen bekannt.

Ein üblicher, elektronisch kommutierter Reluktanzmotor ist auch aus dem Prospektus der Fa. Tasc Drives Ltd., England bekannt. Dieser Motor hat 8 Statorpole und einen sechspoligen Rotor, der sich im Inneren dieses Stators dreht. Der Magnetfluß, den der Rotor erregt, verläuft über zwei gegenüberliegende Pole und durchläuft die Hälfte des Statorumfanges sowie den Durchmesser des Rotors; er durchläuft also in beträchtlicher Länge nichtbewickelte Eisenjoche, die lediglich Verluste verusachen.

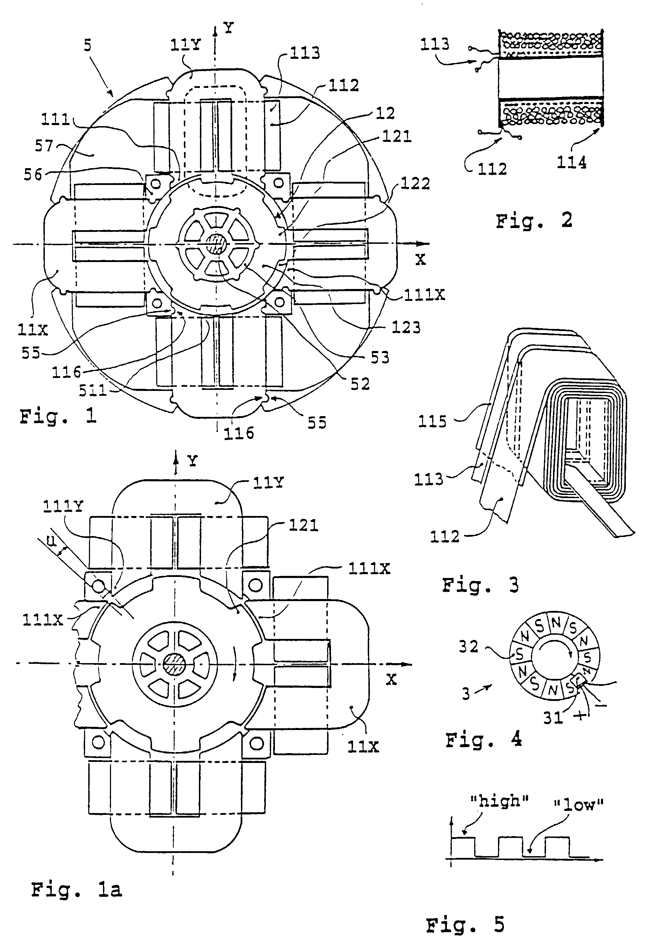

Die DE-OS 295 30 32, Fig.1 zeigt einen Motortyp, der drei bewickelte Ständerjoche hat, die untereinander isoliert sind. Da die Statorpole zu 120 Grad, also nicht gegenüberliegend sind, wirken starke Radialkräfte auf den Rotor, die zu einem vorzeitigen Verschleiß der Lager führen.

Aufgabe der Erfindung ist es, mehrere Möglichkeiten aufzuzeigen, wie man einige Arten von elektronisch kommutierten Motoren baut, und allgemeingültige Lösungen anzubieten, sowohl im Hinblick auf den Magnetkreis wie bezüglich der Kommutierungsschaltkreise, mit dem Ziel, preiswerte, leichte und mit niedrigen Verlusten behaftete Motoren zu bekommen.

Die Aufgabe wird bei einem Reluktanzmotor der eingangs genannten Art mit den in Anspruch 1 angegebenen Mermale gelöst.

Die Erfindung betrifft einen neuen Typ eines Gleichstrommotors, der gewickelte magnetische Joche beinhaltet, wobei das Drehfeld, das der Rotor antreibt, durch die elektronische Kommutierung der Wicklungen der Magnetjoche erfolgt.

Im Gegensatz zu den allermeisten elektronisch kommutierten Motoren braucht der Motor der Erfindung nach keine Permanentmagnete, um einen Nutzdrehmoment zu erzeugen, und ist dadurch billiger herstellbar, als die üblichen Motoren dieser Gattung.

Allgemeine theoretische Betrachtungen:
Die erfindungsgemäßen, elektronisch kommutierten Reliktanzmotoren wurden lange Zeit gegenüber den permanentmagneterregten Motoren als unterlegen betrachtet, weil die Magnetisierungsenergie der Joche nicht von Permanentmagneten stammt, sondern jedes mal, wenn die elektromagnetischen Pole die Rotorpole anziehen sollen, auf elektrischem Wege geliefert werden muß. Diese Energie wird nach der Lehre der Erfindung zyklisch zurückgewonnen und dem funktionell nachfolgenden Joch übertragen, weil die Selbstinduktionsspannung Ua, die aus der Entmagnetisierungsenergie eines Joches 11Y stammt, dem nachfolgenden Joch 11X als Vormagnetisierungsenergie übertragen wird. Dadurch wird Energieersparnis (ein hoher Wirkungsgrad) sowie ein schnellerer Anstieg des Magnetflusses in den Jochen erreicht, denen sich Rotorpole nähern, die sich von den gerade abgeschalteten Polen entfernen.

Um die Erfindung besser zu verstehen, wird hier ein Numerierungssystem der Bezugszeichen der Zeichnungen definiert, in dem die Anfangsbuchstaben des Bezugszeichens die Untergruppe zeigt, zu der der bezeichnete Gegenstand gehört, der folgenden Konvention nach:
- Die Teile des elektromotorischen Kreises (den der Nutzdrehmoment erzeugt) fangen mit der Ziffer 1 an,
- die Teile des elektrischen Steuerkreises der Motorwicklungen fangen mit der Ziffer 2 an,
- die Teile des Kreises, die zur Ermittlung der Stellung der Rotorpole gegenüber der Pole des elektromagnetischen Erregerkreises dienen, fangen mit der Ziffer 3 an,
- die Teile des Magnetkreises, den der Rotor in einer Anlaufstellung bringt (ist nicht an allen Varianten vorhanden) fangen mit dem Ziffer 4 an.

Alle diese Bestangteile sind im Prinzip in vielen Varianten vom Stand der Technik bekannt und sind Gegenstand der Erfindung nur in dem Maße, in dem sie durch sinvolle Kombinationen mit dem magnetomotorischen Kreis (Eisenjoche und Wicklungen) zusammenwirken, welcher wichtige Neuheitsmerkmale hat.

Der motorische Magnetkreis ist dadurch gekennzeichnet, daß auf der Seite der gewickelten Magnet joche (und soweit wie möglich auch auf der Seite des Rotors) Magnetpfade (als Kraftlinien des Magnetflusses verstanden) zum Einsatz kommen, die so kurz wie möglich sind.

Mindestens 50% der Länge des Magnetkreises der gewickelten Joche befinden sich innerhalb der vom Strom durchflossenen Wicklungen, tragen also positiv zu der Entstehung des motorischen Magnetflußes bei.

Im günstigsten Fall kann es vorkommen daß die Wicklungen bis zu 90% der Länge der Joche 11 umfassen.

Das gewickelte Joch (oder die Joche) ist symmetrisch gegenüber dem Rotor angeordnet, so daß keine radialen Magnetkräfte entstehen, sondern nur Drehmomente.

Die Fig. 1 zeigt eine Gesamtansicht eines erfindungsgemäßen Motors als kein einschränkendes Ausführungsbeispiel.

Der magnetische Motorkreis besteht aus 2 waagerechten U-förmigen Magnetjochen 11X und zwei senkrechten Magnetjochen 11Y, wobei die 4 Joche identisch sind.

Jedes Joch hat je zwei Pole 111, die zu dem Rotor gerichtet sind, die die Nord bzw. Süd- Polarität annehmen, wenn durch die Hauptwicklungen 112 oder durch die Nebenwicklungen 113 ein Strom fließt.

Es gibt also acht Pole, die Segmente eines Kreisumfanges darstellen, inmitten dessen der Rotor 12 sich mittig dreht.

Dieser hat sechs Pole 121, die durch einen kleinen Luftspalt von den Außenpolen 111 getrennt sind, die eine Fläche haben, die in etwa der Fläche der Pole 111 entspricht, und eine Breite, die mit der Öffnung der zwei Schenkel der Joche 11 in etwa übereinstimmt.

Wie man der Fig. 1 entnehmen kann, wenn vier Rotorpole 121 gegenüber vier Pole 111 der senkrechten Joche 111Y liegen, so befinden sich die übrigen waagerechten Außenpole 111X gegenüber den Pollücken 122 der Rotorpole 121.

Die Rotorpole 121 sind untereinander durch ein gemeinsames Rotorjoch 123 verbunden, so daß diese Teile lediglich Ausformungen des Blechpaketes des Rotors 12 sind, welches aus gestanztem elektromagnetischem Blech besteht, das eine runde Form mit Zacken hat.

Diese Teile sind mit Hilfe eines elastischen Teils 53 auf der Motorwelle 52 befestigt.

Dieses Teil ist z. B. aus einem Kunststoff mit elastischen Eigenschaften hergestellt und bezweckt, die Rotorschwingungen zu dämpfen oder dessen Gewicht zu reduzieren. Dieses Teil 53 kann fehlen, falls die Bohrung der Rotorbleche 12 direkt auf die Motorwelle 52 preßt.

Die gewickelten Joche 11 sind auch aus U-förmigen Blechpaketen gebildet, wobei die Blechstärke je nach der Motordrehzahl (Kommutationsfrequenz) gewählt wird.

Als Richtwert sowohl für die Stärke der Bleche der Joche 11 wie für die der rotorischen Bleche sind 0,1 bis 1mm, wobei die dünnen Bleche für hohe Drehzahlen (50 000 U/min.) geeignet sind, und die dicken Bleche für Drehzahlen bis ca. 500-1000 U/min. zum Einsatz kommen.

Als preisgünstices Material für die gewickelten Joche 11 wie für den Rotor 12 wird Siliziumblech (für Transformatoren) empfohlen.

Für die gewickelten Joche 11 kann man auch kornorientierte Bleche mit einer magnetischen Vorzugsrichtung verwenden, in Form von U-Stanzblechen (die Vorzugsrichtung ist dabei paralell zu den U-Schenkeln) oder in der Form von gewickelten, geschnittenen und geschliffenen Kernen (wie bei Transformatoren mit Schnittbandkernen). Diese Lösung ist allerdings teuerer.

Der Querschnitt der Joche ist auf jeden Fall rechteckig, was zu Problemen bei der Bewicklung mit stärkeren Drähten (über 1mm2 Querschnitt) führen kann.

In einer speziellen Ausführung weist die isolierende Schicht zwischen den Blechen elastische Eigenschaften auf, was zu der Dämpfung der magnetostriktiven Schwingungen oder zu der Abdichtung des Blechpaketes dienen kann.

Auf die U-Joche werden (vorzugsweise vorgefertigte) Wicklungen eingeschoben, wobei jedes Joch mindestens eine Hauptwicklung 112 hat.

Diese Wicklungen können in üblicher Weise mit Lackdraht, mit oder ohne Wickelkörper (mit Backlackdraht) ausgeführt werden, s. Fig. 2.

Bei einer üblichen Drahtwicklung kann sich z. B. die mit dünnerem Draht ausgeführte Nebenwicklung 113 auf einem Wickelkörper 114 befinden, unter der Hauptwicklung 112.

Vorzugsweise wird jedoch der Erfindung nach eine Bandwicklung eingesetzt, und zwar aus einem isolierten oder nichtisolierten Kupfer- oder Aluminiumband.

In letzterem Fall wird das Hauptwickelband einseitig mit einer Isolierfolie 115 (z.B. aus Polyester) flankiert, die etwas breiter als das elektrisch leitende Band ist, so daß Kurzschlüsse zwischen den spiralförmig gewickelten Rändern des metallischen Wickelbandes nicht erfolgen können, s. Fig. 3.

Eine besonders günstige Lösung ist die gleichzeitige Ausführung der Hauptwicklung 112 wie der Nebenwicklung mit geringerem Querschnitt 113.

In diesem Fall werden die gleich starken, jedoch unterschiedliche Breite aufweisenden Wickelbänder in angemessenen Abstand paralell über das gleiche, ausreichend breite isoliorende Folie 115 gewickelt.

Da die Ausführung dieser Wicklungen Techniken benutzt, die von der Herstellung von Kondensatoren und Transformatoren bekannt sind, werden wir keine Details beschreiben, die die Ausführung der Anschlüsse und die Verfestigung einer wickelkörperlosen Spule betreffen.

Je zwei der in Verbindung zu der Fig. 2 und 3 beschriebenen Wicklungen werden über die zwei Schenkel der Joche 111 eingeschoben, wo sie nach Bedarf geschaltet werden können.

Der motorische Magnetkreis 1 besteht also aus der gewickelten Joche 11 mit je zwei Kernen 11X und 11Y, acht Hauptwicklungen 112 und eventuell acht Nebenwicklungen 113, zusammen mit dem Rotor 12.

Wenn man getrennt ein Joch 11 betrachtet und zwei Rotorpole 121, zusammen mit dem Teil des Joches 123, das diese Pole verbindet, und wenn die zwei Wicklungen 112 von Strom durchflossen werden, so entsteht ein Magnetfluß, der der Punktlinie aus Fig.1 entspricht, sodaß dieses Magnetkreis dem eines Schwingmotors aus einen Rasierapparat ähnelt.

Wenn die Rotorpole 121 nicht den Polen 111X der Außenjoche gegenüberliegen (siehe Fig.1), und wenn die Joche 11X feststehen, so werden als Folge des Stromdurchganges die Pole 111X die Rotorpole 122 anziehen, wobei ein Drehmoment entsteht, das den Rotor 12 um ca. 30 Grad dreht.

Damit diese diskreten 30 Grad Bewegungen zu einer kontinuierlichen Drehbewegung werden, ist es notwendig, daß die Stromleitung zu den in Richtung der Achsen X und Y gewickelten Joche in einer entsprechenden Reihenfolge geschieht, welche von dem Rotorpositionserfassungskreis 3 koordiniert wird, und vom elektronischem Steuerkreis 2 in Steuersignale der Wicklungen umgesetzt ist.

Der Rotorpositionserfassungskreis 3, welcher das Abschaltsignal für die Wicklungen der X- Achse bzw. das Einschaltsignal für die der Y- Achse nach einer Rotordrehung von 30 Grad liefern soll, besteht nach der Fig. 4 aus einer mehrpoligen Magnetscheibe 32, die sechs Polpaare hat und auf dem Rotor befestigt ist, der sich vor einem feststehendem Hallsensor 31 bewegt, welcher in seiner Stellung zum Zwecke der Findung eines optimalen Arbeitspunktes, der Leistungsregelung oder zur Drehrichtungsumkehr anpaßbar ist. Wenn die Pole der Magnetscheibe 32 sich hintoreinander vor dem Hallsensor 31 (mit digitalen Ausgang) bewegen, so erscheint an dessen Ausgang ein Logiksignal "low" oder "high", je nach der Rotorlage, siehe Fig. 5.

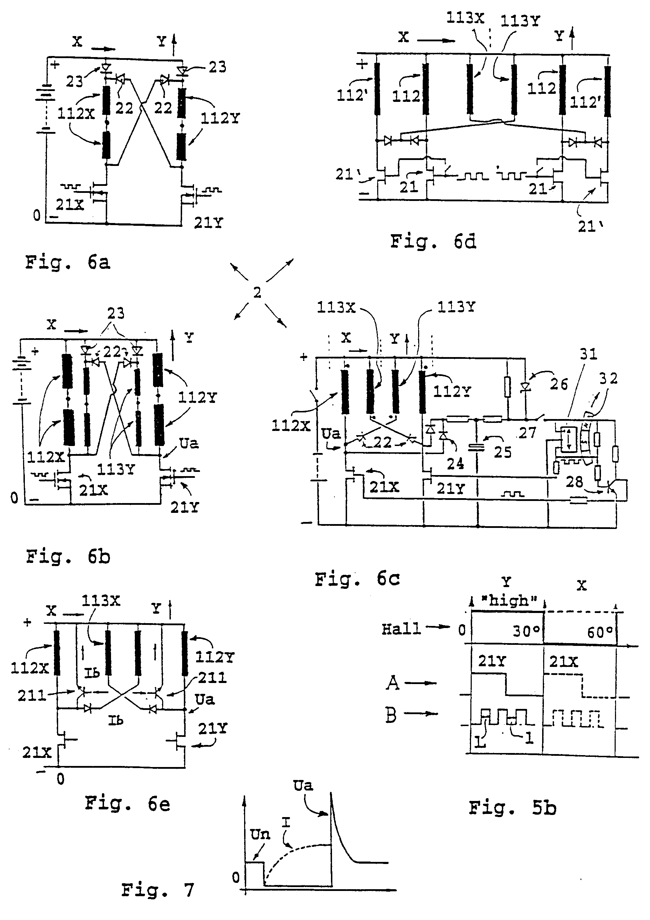

Der Steuerkreis 2 der Wicklungen 112 und 113 besteht hauptsächlich aus zwei Leistungstransistoren (vorzugsweise MOSFET Feldeffekttransistoren) 21X, 21Y, die in Reihe mit den Hauptwicklungen 112X, bzw. 112Y und der dem Motor außenliegenden Stromquelle geschaltet sind, siehe Fig. 6.

Die Wicklungen 112 bzw. 113X (oder Y), die sich auf gegenüberliegenden Jochen befinden, können in Reihe oder paralell geschaltet werden, je nach dem Spannungspegel, zu den, der Motor arbeitet.

Die Transistoren 21X und 21Y sind im Gegentakt durch eine einfache elektronische Schaltung von dem Rotorstellungserfassungskreis 3 gesteuert, so daß wenn der Ausgang des Hallsensors "high" ist, leitet der Transistor 21X, und der Transistor 21Y leitet, wenn der Ausgang des Hallsensors "low" ist.

Die waagerechten gewickelten Joche 11X bzw. die senkrechten Joche 11Y werden also nacheinander magnetisiert, so daß an den Polen 111 ein Drehfeld erscheint welches den Rotor in Bewegung versetzt.

Die positive Spannung an dem Verbindungspunkt zwischen dem Drain der Transistoren 21X, 21Y und den Wicklungen 112X bzw. 112Y (gegenüber 0 = Minus) ist in Fig. 7 durch eine durchgezogenee Linie dargestellt; der Strom, welcher durch die Hauptwicklungen 112 fließt hat wegen der Wirkung der Induktivität den Verlauf der Punktlinie aus der Fig. 7. In der Anfangsphase steigt also der Strom langsam, und in ähnlicher Weise der motorisch wirksame Magnetfluß.

Wenn die Wicklung abgeschaltet wird, entsteht innerhalb dieser eine beträchtliche Spannung Ua, die höher liegt als Un = Motornennspannung, die eine verlorene Energie darstellt und zur Zerstörung der Transistoren 21 führen kann. Diese Selbstinduktionsspannung Ua kann in eine nützliche motorische Wirkung umgewandelt werden, falls Sie der Wicklung zugeleitet wird, die gerade eingeschaltet werden soll.

Wie aus der Fig. 6a ersichtlich ist soll dies mit Hilfe der Koppeldioden 22 geschehen, die die positive Überspannung, die bei der Abschaltung der Wicklung 112X entsteht der Wicklung 112Y (oder umgekehrt) zuführen.

Die Entkopplungsdioden 23 verhindern, daß die Selbstinduktionsspannung Ua zu dem plus- Anschluß der Spannungsquelle geführt wird.

Diese Schaltung hat jedoch den Nachteil daß die Schließung des elektrischen Kreises der Selbstinduktionsspannung Ua durch die Transistoren 21, bzw. über die Stromquelle geschieht.

Diesen Nachteil kann man durch die Benutzung von Nebenwicklungen vermeiden, die sich auf den gleichen Joche 11 befinden, s. Fig. 6 b.

Die Selbstinduktionsspannung Ua entsteht in der Hauptwicklung 112X (als Quelle) und wird der Nebenwicklungen 113Y der senkrechten Joche als Empfänger zugeleitet.

Mit Hilfe der Selbstinduktionsüberspannung Ua von der Hauptwicklung 112X wird also ein Nutzstrom in den Nebenwicklungen 113Y produziert, also ein Magnetfluß in den Jochen 11Y, auf die diese gewickelt sind.

Gleichzeitig mit der Entstehung des Stromes durch die Nebenwicklung 113Y wird auch die Nennspannung Un der Hauptwicklung 112Y zugeführt, weil, gleichzeitig mit der Sperrung des Transistors 21X der Transistor 21Y leitend wird. Die Wirkung des schnell ansteigenden transienten Stromes in der Nebenwicklung 113Y, welcher recht schnell ansteigt, und die des längerandauernden, jedoch langsamer ansteigenden Stromes durch die Hauptwicklungen 112Y addieren sich, was zu einem schnelleren Anstieg des magnetischen Flußes durch die senkrechten Joche, also zu der Erhöhung der motorischen Wirkung führt.

Der Rotor 12 wird durch die Wiederholung der oben beschriebenen elektromagnetischen Vorgänge in eine kontinuierliche Drehbewegung versetzt, so daß er eine komplette Umdrehung ausführt wenn jedes Jochpaar sechs Steuerimpulse empfängt.

Die Optimierung des Schaltpunktes kann praktisch durch die Verschiebung des Hallsensors 31 gegenüber den Jochen 11 erfolgen.

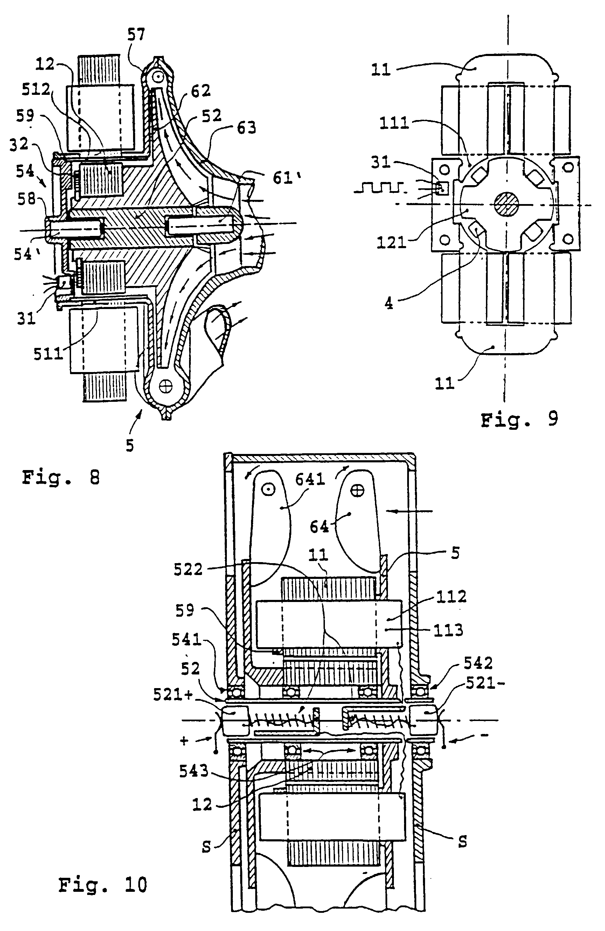

Die magnetischen und die elektrischen Teile des Motors können in einem Aufnahmerahmen 5 befestigt werden, welcher aus Kunststoff hergestellt ist oder aus einem passenden nichtmagnetischen Metall druckgegossen wurde, s. Fig. 1 und 8. Dieser Rahmen kann in sehr unterschiedlichen Arten ausgeführt werden, er hat jedoch hauptsächlich Ausnehmungen, in die die Joche 11 und das Lager 54 der Motorwelle 52 befestigt sind.

Ebenfalls auf diesem Rahmen 5, der als Kühler dient, können wie üblich die Leistungstransistoren 21, die Dioden 22 und 23 sowie andere mechanische und elektrische Bauteile (Platine, Hallsensor, u.s.w.) befestigt werden. Die höhere Spannung, die für die Gate-Ansteuerung der Leistungstransistoren 21 notwendig ist, kann durch die Integrierung der Spitzen der Selbstinduktionsspannung Ua gewonnen werden.

Für das bessere Verständnis werden wir mit der Fig.1a anfangen, welche ein Vergrößertes Detail der Fig. 1 ist.

Dis Fig.1 und 1a werden im Zusammenhang mit der Fig.6c betrachtet, welche eine Verbesserung und Detaillierung der Fig. 6b darstellt.

Nach Fig. 1, wenn 4 Rotorpole 121 ungefähr mit den Polen 111Y übereinstimmen, werden deren zugeordnete Hauptwicklungen 112Y abgeschaltet, was unmittelbar zum Erscheinen der großen Selbstinduktionsspannung Ua führt, die auf die Nebenwicklungen 113X übertragen wird, wobei die Hauptwicklungen 112X von der Stromquelle gespeist werden. Die diesen Wicklungen zugeordneten vier Pole 111X werden recht schnell aufmagnetisiert und sind dadurch imstande, die vier Rotorpole 121 anzuziehen, von denen zwei sich gerade von den zwei entsprechenden Pole der abgeschalteten Joche 11Y entfernen.

Die Voraussetzung, damit dies geschieht, ist, daß die spitzwinkligen Extremitäten der Pole 111X sich in der Nähe der entsprechenden Extremitäten der Pole 111Y befinden, weil sonst die Aufmagnetisierung der Pole 111X der horizontalen Joche nicht rechtzeitig eine Anziehungswirkung auf die Rotorpole ausüben könnten, so daß der Strom in den Wicklungen 112X, 113X, steil aber ohne eine nützliche Wirkung ansteigen würde.

Um die Wichtigkeit dieser Tatsachen zu verdeutlichen, wurde in Fig.1a der als Winkel "u" betrachtete Abstand zwischen den Außenecken der Pole 111X und 111Y gegenüber der in Fig. 1 dargestellten verringert.

Dieser Abstand muß je nach den elektromechanischen Parametern des jeweiligen Motors optimiert werden, und er ist mindestens 3-4 mal größer als der Luftspalt zwischen den Jochen 11 und dem Rotor 12, um zu vermeiden, daß durch den direkten Kontakt zwischen den Jochen 11X und 11Y magnetische Verluste entstehen.

Die Befestigung der Joche 11 untereinander, sowie der Anschluß des Motors an einen feststehenden Träger wird vorzugsweise in diesem Bereich zwischen den Wicklungen und dem Rotor durchgeführt, wo ein geringer Schwingungspegel festgestellt wurde.

Die Fig.6c stellt den vollständigen Schaltplan eines funktionsfähigen Motors dar, wobei die Punkte neben den Wicklungen 112 und 113 deren Anfänge bezeichnen, und 112X z. B. die vier Hauptwicklungen der Joche 11X darstellt, die in Reihe oder paralell geschaltet werden können.

Hier werden lediglich zwei Koppeldioden 22 benötigt, die die Selbstinduktionsspannung Ua zu den Anfängen der Nebenwicklungen 113 weiterleiten. Die Dioden 24 leiten die Spannungsspitzen Ua zum Kondensator 25, der nach dem Anlaufen des Motors mit einer Spannung aufgeladen wird, die höher liegt als die Versorgungsspannung Ubat und die die Versorgung des Steuerkreises der Gate-Elektroden der Transistoren 21Y, 21X gewährleisten Diese Spannung wird von der Zenerdiode 26 begrenzt.

Wenn der Schalter 27 geschlosen ist, wird der Hallsensor 31 unter Strom gesetzt und an dessen digitalem Ausgang, der mit der Gate-Elektrode der Transistoren 21Y verbunden ist, erscheint das Logiksignal "high" oder "low", je nachdem ob sich vor dem Hallsensor ein. "Nord"- oder "Süd"-Pol der mehrpoligen Magnetscheibe 32 befindet.

Dieses Logiksignal wird auch dem Signalinversioflstransistor 28 appliziert, der der Gate- Elektrode des Transistors 21X das "low" Signal appliziert, wenn an der Gate-Elekrode des Transistors 21Y das Signal "high" vorhanden ist. Der Pfeil oberhalb des Hallsensors 31 zeigt, daß dieser gegenüber seinem Träger beweglich ist, damit man dadurch die Phase der Logiksianale, die bei der Drehung dar mehrpoligen Magnetscheibe 32 entstahen, ändern kann.

Die Drehzahlregelung des Motors kann auch ohne die Änderung der Phase der Steuersignale durch die Änderung der Versoraungsspannung erfolgen.

Die Drehzahländerung kann auch durch die Änderung des Widerstandes der Transistoren 21, also durch die Regelung der Gate-Soannung erfolgen.

Diese Regelung ist jedoch nachteilig, weil sie ohm sche Verluste verursacht und die Transistoren belastet und sollte daher nur für kleine Leistungen eingesetzt werden.

Eine zwei Stufen-Regelung kann durch die Erhöhung des ohm schen Widerstandes des Motors erfolgen, z. B. durch die Abtrennung einer Hälfte der paralell geschalteten Wicklungen, s. Fig.6d.

Die über die Transistoren 21, 21' paralellgeschalteten Wicklungen 112, 112' werden gleichzeitig gesteuert wenn vom Motor die volle Leistung abverlangt wird. Wird eine Leistungsverringerung erwünscht, so werden die Transistoren 21' nicht mehr angesteuert, und so bleibt die Wicklung 112' außer Betrieb. Der Motor arbeitet also mit höheren Verlusten und einer verminderten Leistung.

Eine vorteilhaftere Variante der weitergehenden Leistungsregelung ist prinzipiell in Anschluß an Fig.6e dargestellt.

In der Steuerschaltung des Motors werden zwei weitere Halbleiterventilbausteine (hier bipolare Transistoren) hinzugefügt, die die Rolle einer Freileufdiode spielen, welche die Sebstinduktionsspannung der Wicklung, die sie generiert hat, zurückführen, aber diesmal steuerber sind.

Die Fig.5b zeigt, vom Rotordrehwinkel abhängig die Steuersignale der Transistoren 21 und der Transistoren 211, die die Selbstinduktionsspannung Ua zurückführen.

Auf der Abszisse der Fig. 5b ist das Ausgangssignal des Hallsensors dargestellt, der einem Rotorwinkel von 30° entspricht und der die gleiche Dauer wie der Stromimpuls hat, der der Basis des Transistors 211Y appliziert wird.

Die Dauer der positiven Spannungsimpulse, die der MOSFET- Transistoren 21Y für die Leistungsregelung appliziert werden, ist auf der unteren Abszissen in zwei Varianten dargestellt, wobei diese Dauer nur bei Vollast 30° erreicht.

In der ersten Variante A werden die Transistoren 21 und 211 gleichzeitig leitend, und zwar wenn das Logiksignal am Ausgang des Hallsensors von "low" auf "high" wechselt.

Bei Teillast sperrt der Transistor 21Y bevor der Hallsensor wieder zum Logiksignal "low" schaltet, also bevor der Rotor eine 30° Drehung vollzieht.

Die Sperrung des Transistors 21 kann z.B. durch das Erreichen eines Grenzwertes des Stromes oder der Drehzahl (der Kommutationsfrequenz) bewirkt werden.

Wenn dies geschieht, wird die Selbstinduktionsspannung Ua nicht sofort der Nebenwicklung 113X zugeleitet, weil der Transistor 211Y diese Spannung zum plus-Anschluß der Versorgungsspannung Ubat führt.

Dadurch wird die Entmagnetisierung der Joche 11Y gebremst, die die Rotorpole 121 weiterhin anziehen.

Wenn der Rotordrehwinkel 30° erreicht ist , d. h. wenn der Basisstrom der Transistoren 211Y aufhört und der Ausgang des Hallsensors 31 den Logikpegel "low" annimmt, hört der Durchgang des Reststromes durch der Transistor 211Y auf, und die Selbstinduktionsspannung Ua wird der Nebenwicklung 113X zugeleitet.

In ähnlicher Weise, jedoch bei einem um 30° versetzten Rotorwinkel (z.B 30-60° anstatt 0-30°) wiederholt sich in Bezug auf die waagerechten Joche 11X, was bei der Y-Achse geschah, die Transistoren 21X und 211X werden also leitend, weil das Logiksignal am Ausgang des Hallsensors "low" anstelle von "high" wurde.

Durch diese Regelungsart wird also die Steuerung der Transistoren 21X, 21Y rotorwinkelabhängig erreicht mit einem variablen, maximal 30° erreichenden, also keinem festen 30°- Öffnungswinkel, wie bei den ungeregelten Motoren.

Durch diese Variation der Öffnungszeit der Transistoren 21 wird die Energiezufuhr, also die Motorleistung, geregelt.

Nach der in Fig. 5b dargestellten Variante B wird durch die wiederholte Stromleitung der Transistoren 21X, 21Y innerhalb eines 30° Ratorwinkels eine ähnliche Wirkung erzielt.

Dieses wird durch eine Pulsbreitenmodulatiom (L = Impuls, l = Pause) mit angemessener Frequenz der Steinersignale der Transistoren 21 erreicht.

Die Stromleitungszeiten des Transistors 21Y sind mit einer fettgezeichneten, die des Transistors 21X mit einer gestrichelten Linie dargestellt.

Es ist vorteilhaft, alle elektronischen Bauteile des Motors auf einer Platte so weit wie möglich zu integrieren.

Die in der Fig. 1 und 8 sichtbare Montage der Joche 11 ist, (des kleinen Luftspaltes Rotor- gewickelter Joch wegen) wichtig und anspruchsvoll.

Wie es hier ersichtlich ist, weisen die Joche 11 beidseitig (ggf. in zwei von der Welle unterschiedlichen Entfernungen) Ausnehmungen oder halbrunde Erhebungen 116 auf, die über geeignete Gegenstücke 55 passend (senkrecht zu der Zeichnungsebene) eingeschoben werden können.

Diese Gegenstücke stellen eine Negativform der vorhin erwähnten Ausnehmumngen 116 dar und sind Bestandteil der Befestigungsstücke 56, die sich auf einer Basisplatte 57 befinden.

Die Joche sind also formschlüssig radial befestigt, was einen gleichmäßigen Abstand gegenüber dem Rotor 12 (einen konstanten Luftspalt) gewährleistet.

Der Lagerdeckel 58 mit dem Gegenlager 54', die an dem Rahmen 5 axial wie radial befestigt sind, hält die Joche 11, damit sich diese nicht axial verschieben können.

Mit diesen Bestandteilen ist der Motor funktionsfähig.

### Funktionsweise:

Wenn der Motor an eine Stromquelle mit der Spannung Un angeschlossen ist, so wird die elektronische Schaltung 2 eine Steuerspannung an der Gate-Elektrode einer der Transistoren 21, z.B. an 21Y applizieren, weil am Ausgang des Hallsensors 31 ein Signalpegel "high" oder "low" vorhanden ist. Die Hauptwicklung 112Y wird unter Strom gesetzt und bewegt den Rotor 12 aus der in Fig. 1 dargestellten Ausgangsstellung durch eine 30 Grad Drehung zu einer Stellung in welcher die Pole 111X - 121 übereinstimmen. Es kommt also von der Relativstellung der Pole gegenüber der Y- Achse zu einer ähnlichen Stellung, dies jedoch der Achse X gegenüber. Bevor diese Stellung erreicht wird, ändert der Rotorpositionsensor 3 den Logikpegel am Ausgang des Hallsensors 31, sodaß der Transistor 21X leitend wird, während 21Y sperrt. Die bereits beschriebenen Vorgänge wiederholen sich und der Rotor dreht sich kontinuierlich und vollzieht eine ganze Umdrehung gegenüber der gewickelten Joche 11 nachdem jedes Paar davon (X und Y) sechs Stromimpulse erhalten hat. Das Anhalten bzw. das Anlaufen des Motors kann dadurch erreicht werden, indem die Gate-Anschlüße der Transistoren 21 an der Minusleitung verbunden werden, ohne den Motor von der Spannungsquelle zu trennen. Bei einem digitalen Hallsensor 31 erfolgt die Änderung des logischen Ausgangsignals immer bei dem gleichem Relativwinkel der Rotorpole 21 gegenüber der Pole 111 der Joche 11, wobei diese Stellung als Winkel 0 bezeichnet wird. Im Interesse der Leistungs- bzw. Drehzahlregelung kann es notwendig sein, diesen Winkel z.B. um +/- 5 Grad zu ändern. Dies kann durch die mechanische Änderung der Stellung des Hallsensors oder durch die Beeinflüßung seines Schaltpunktes mit Hilfe eines äußeren Magnetfeldes, welches das wechselnde Magnetfeld der mehrpoligen Magnetscheibe 32 (durch Phasenverschiebung) ändert.

Wenn man einen analogen Hallsensor benutzt, so wird an dessen Ausgang ein Sinussignal anstelle des Rechtecksignals nach Fig. 5. Der Umschaltpunkt kann in diesem Fall beliebig gegenüber Null geändert werden, wenn man einen beliebigen Punkt der Sinuskurve als Schaltspannungspegel für die Auslösung der Kommutierung wählt.

Auch diese Sinuskurve kann, wie vorhin erwähnt, phasenverschoben werden, sodaß es in diesem Fall zwei Möglichkeiten gibt um den Kommutierungswinkel zu beeinflüßen. Die erwähnte Beeinflüssung des Magnetfeldes kann praktisch mit Hilfe einer Wicklung oder eines Permanentmagnetes erreicht werden, die in der Nähe des Hallsensors angebracht werden, wobei durch die Wicklung ein Strom fließt, der nahezu gleichbleibend ist. Die Drehrichtungsumkehr kann durch die Veränderung des Logiksignals aus Fig. 5 erreicht werden, so daß der Transistor 21X leitend wird, wenn das Logiksignal des Hallsensors "high" statt "low" ist, oder durch die Umschaltung zu einem anderen Hallsensor, welcher gegenüber dem ersteren winkelverschoben ist.

Die hier dargestellten, bürstenlosen Motorvarianten, können in eine Flüssigkeit, z.B. einem Treibstoff, eingetaucht funktionieren, falls die elektrischen Teile z.B. durch die Einbettung in einen Kunstharz geschützt werden.

Es können also mit diese Motoren einfache Pumpen ohne eine Luftspaltabdichtung realisiert werden, wobei der ganze Motor sich in einem Pumpengehäuse unter Druck befindet.

Diese Motorart ist für den Antrieb von Ventilatoren und Pumpen besonders geeignet, insbesondere für die bei welchen sich der Rotor des Motors sowie der der Pumpe solidarisch in einer Flüssigkeit drehen, s. Fig. 8.

In diesem Fall ist es nötig, daß man den Rotorraum gegenüber der Wicklungen bzw. den Außenraum abdichtet.

Das Hzuptproblem hier ist die Abdichtung des zylindrischen Luftspaltraumes weil dessen radiale Abmessung in der Größenordnung des Zehntelmilimeters liegt.

Dieses Problem ist im Sinne der Erfindung gelöst mit Hilfe einer dünnen, zylindrischen Hülle 512 aus nichtmagnetischem Material (Kunststoff oder flüssig aufgetragenem Polymer), oder Edelstahl mit speziellen elektrischen und magnetischen Eigenschaften, wie z.B. von den Luftspaltrohren der Naßläufer- Asynchronmotorpumpen bekannt. Dieses Zylinderstück würde alleine dem Druck nicht standhalten; es stützt sich jedoch auf die Außenpole 111, bzw. auf Segmente aus Füllmaterial 511, welche sich zwischen den genannten Polen befinden. Auf diese Weise wirkt der Druck lediglich auf Bereiche der zylindrischen Hülle 512, die nicht größer als einige Zehntel Milimeter sind, und die den Räume zwischen den Polen 111 und den Segmenten 511 entsprechen. Auf so kleinen Bereichen belastet, wiedersteht sogar eine dünne Folie (0,1mm) Drücke von einige Zehn Bar.

Ein Zusammenbau Motor- Pumpe im Sinne der Erfindung kann nach Fig. 8 wie folgt durchgeführt werden:

Die Joche 11 werden von außen (von links) auf dem (aus Kunststoff oder Metall hergestellten) Rahmen 5 montiert und durch den Haltering oder -Deckel 59 montiert.

Die vorhin erwähnten Zwischenräume aus dem zylindrischen Rotorraum werden z.B. mit einem Polymerlack, Epoxydharz, u.s.w. abgedichtet.

Der Rotor 12 mit dar auf der linken Seite befestigten mehrpoligen Magnetscheibe 32 wird zusammen mit dem Pumpenrotor 62, der in dem Rotor 12 einrastet, auf der Motorwelle 52 montiert; die Motorwelle 12 muß also nicht den Motornutzmoment übertragen.

Der Zusammenbau wird mit dem Pumpendeckel 63 geschlossen, welcher auch den Lagerbolzen 61' zentriert.

Es werden hier nicht die bekannten Konstrinktionsdetails einer Pumpe erörtert, lediglich die Fließrichtung der gepumpten Flüssigkeit ist durch Pfeile gezeigt.

Der Hallsensor 31 befindet sich in den (trockenen) Außenraum der Pumpe, und ist durch eine dünne, druckfeste und magnetfelddurchlässige Wand von der Magnetscheibe 32 getrennt, die sich in dem "nassen" Rotorraum befindet.

Die Motor- bzw. Pumpenwelle 52 ist z.B. aus einem Keramikrohr gefertigt in der Bohrungen für die Lagerbolzen 54' und 61' praktiziert sind.

Die Verringerung der Geräuschentwicklung ist eines der Hauptprobleme der Lüfter und Gebläse und manchmal entsteht das Geräusch aufgrund der Drehmomentschwankungen, die vom Stator des Motors als Schwingungen auf den Träger übertragen werden.

Um diesen Nachteil zu beseitigen, kann man der Erfindung nach eine besondere Variante eines Motorgebläses realisieren, die zwei gegenläufig rotierende Rotoren haben, so daß der Motor keine festen Teile hat, die Schwingungen auf einen Träger übertragen können, die auf das Drehmoment zurückzuführen sind.

Der Fig. 10 nach sind die Joche 11 mit den Wicklungen 112, 113, zusammen mit den dazugehörenden elektronischen Bauteilen auf einen Träger 5 befestigt, wobei dieser Träger auch mit einer Drehwelle 52 verbunden ist, die vorzugsweise eine axiale Bohrung aufweist.

Ebenfalls an diesem Träger sind Lüfterschaufeln 64 angbracht, die die Luft von rechts nach links fördern, wenn der Träger 5 sich nach rechts dreht.

An den Enden der Welle 52 sind Lagerstellen 541 bzw. 542 vorgesehen.

Auf der linken Seite sind diesmal die Joche gegenüber dem Träger 5 nicht an einem Lagerdeckel, sondern an einem Haltering 59 befestigt, durch den der Rotor 12 hindurchgeht.

Der Rotor 12 trägt Lüfterschaufeln 641, die die Luft von rechts nach links befördern, wenn der Rotor nach links dreht.

Der Rotor dreht frei auf der Welle 52 mit Hilfe der Lager 543, ohne sich axial zu verschieben. Im Inneren der Welle 52 sind, innerhalb eines Isolierrohrs zwei untereinander isolierte und mit Motoranschlüssen verbundenen Bürsten 521+, 521- untergebracht, die von Federn 522 nach außen gedruckt werden.

Diese Bürsten berühren zwei feststehende Lamellen +, -, die mit der Stromquelle Ubat verbunden sind, die diese Spannung auf den drehenden Bürsten 521+, 521- übertragen. Die Lager 541 und 542 sind in einem Träger S befestigt.

### Funktionsweise:

Wenn der Motor Strom bekommt, laufen sowohl der mit Lüfterschaufeln 641 versehene Rotor 12 als auch der Außenrotorzusamenbau mit Joch 11, Träger 5 und Schaufeln 64 in gegenseitigen Drehrichtungen an (der Rotor nach links, der Außenrotorzusammenbau nach rechts) und bewegen sich mit Drehgeschwindigkeiten +v, -v, so daß die absolute Rotationsgeschwindigkeit zwischen Rotor und Außenrotorzusammenbau 2v beträgt.

Die Drehzahl der zwei gegenläufigen Teile wird ansteigen bis der Widerstand, die die Luft der Schaufeln 64, 641 entgegensetzt, die auf die beiden Rotoren montiert sind, genausogroß ist wie der Motordrehmoment, Dieses Gebläse mit zwei gegenläufigen Rotoren hat den Vorteil, als zweistufiges Gebläse mit einer relativ niedrigen Drehgeschwindigkeit, also mit einem niedrigen Geräuschpegel, zu wirken.

Für den Motor wird jedoch die Auslegungsgeschwindigkeit (die Relativdrehzahl zwischen den zwei gegenläufigen Teilen) 2v sein.

Im Vergleich mit einem herkömmlichen, einstufigen Gebläse mit der gleichen Leistung sind die Vorteile eindeutig:
- es werden keine Reaktionsmomente, also keine daraus stammenden Drehschwingungen, auf den Träger S übertragen
- der Motor wird für eine doppelte Drehzahl bei gleicher Leistung ausgelegt, und wird dadurch erheblich kleiner und leichter.

Es können anhand dieses Prinzips anstelle eines Axialgebläses gegenläufige Gebläse mit Radiallüfter gebaut werden, so daß dabei die Axialkräfte ausgeglichen sind.

Falls man die Leistungsregelung bei diesen Motoren anstrebt, so ist es notwendig, von außen auf die zusammen mit dem Außenrotorzusammenbau 11, 5, mitdrehenden Transistoren 21 einzuwirken.

Dies ist durch eine geeignete, vom Stand der Technik bekannte Elektronik möglich, die von außen, ohne galvanische Verbindung, z.B. auf magnetischem Wege mit Hilfe einer Sendewicklung und eines Empfängers, oder auf optischem Wege, Steuersignale bekommt.

Diese Motorart (bzw. Pumpenart) mit dem einfachen Funktionsprinzip, welches auf den sukkzessiven Anzug der Rotorpole durch elektromagnetische Pole beruht, kann auch mit einer unterschiedlichen Anzahl von Jochen ausgeführt werden, z.B. sechs oder acht statt vier, mit der entsprechenden Erhöhung der Anzahl der Rotorpole.

Sie kann auch mehrphasig ausgeführt werden, z.B. mit drei Phasen R,S,T, die äquidistant angeordnet sind, also zu einem elektrischen Winkel von 120 Grad anstelle von 180 Grad wie bisher.

Wenn die Rotor- bzw. die Elektromagnetpole zweckmäßig angepaßt werden, kann man auch U-Joche einsetzen, deren Schenkel axial statt tangential angeordnet sind. Bei dieser Motor kann man auch auf den Rotorpositionssensor verzichten; dies bedeutet jedoch, daß mann ein etwas komplizierteres elektronischen Anlauf- und Betriebsprogramm anwenden muß, dem folgenden Prinzip nach:
- vor dem Motorstart werden in den Wicklungen elektrische Signale eingespeist, die abhängig von der Wicklungsinduktivität geändert werden, wobei erstere von der Rotorstellung abhängt, weil diese die Reluktanz (Induktivität) der Magnetkreise der betroffenen Joche bedingt.
- eine elektronische Logik vergleicht diese modifizierten Signale und ermittelt die Rotorstellung daraus, so daß am Ausgang dieser Schaltung ein Steuersignal des Transistors 21X oder 21Y erscheint,
- Die Wicklungen, die in Reihe mit dem leitenden Transistor liegen, werden angesteuert und versetzen den Rotor in Bewegung, der durch Einfluß aufmagnetisiert wird,
- wenn die so aufmagnetisierten Rotorpole sich den Polen der stromlosen Joche nähern, so wird in diese eine Spannung induziert, die von einem Schaltkreis ausgewertet wird, welcher diese Wicklung (Phase) die Nennspannung zuführt, sodaß der Rotor weiter angezogen wird.

Diese letzten Vorgänge wiederholen sich, so deß der Rotor sich dreht, als ob er von einem Rotorstellungserkennungssensor gesteuert wäre.

Nach erfolgtem Anlaufen des Motors gibt es auch andere Selbststeuerungsmögalichkeiten der Kommutation, wie z.B. die Abschaltung einer Wicklung, wenn der Strom, der sie durchläuft, einen maximalen oder vorbestimmten Wert überschreitet; wenn ein solcher Wert während des normalen Motorbetriebs erreicht ist, bedeutet dies, daß die Rotorpole 121 von den Polen 111, die zu dieser Wicklung gehören, bereits angezogen wurden.

Die Abschaltung einer Wicklung (z.B. 112X) führt über die elektronische Logik zu der Einschaltung (ggf. nach einer vorbestimmten Verzögerung) der nachfolgenden Wicklung, z.B. 112Y.

Die verkettete zyklische Steuerung der Jochpaare X-Y, X-Y, bzw. R-S-T, R-S-T,...falls drei (oder mehrere) Phasen vorhanden sind, kann also über Rotorstellungssensoden oder abhängig von einen Motorparameter (Strom, induzierte Spannung) gesteuert werden.

Diese zyklische Steuerung kann in manchen Fällen von außen aufgezwungen werden, wobei der Motor mit einer von außen vorbestimmten Drahzahl arbeitet. Die Transistoren 21X, 21Y sind in diesem Fall von Signalen gesteuert, die von einem motoräußeren Generator stammen.

Für diese Art der Steuerung kann die Benutzung eines Asynchronrotors (Käfigläufer) anstelle des unter der Fig. 1 beschriebenen Rotors von Vorteil sein.

Wenn man die gleichen elektromagnetischen Kriterien beachtet, kann diese Motorart auch mit Jochen ausgeführt werden, die sich im Inneren eines Becherläufers befinden.

Eine einfachere Variante eines Motors im Sinne der Erfindung ist in Fig. 9 abgebildet. Dieser Motor hat nur zwei gegenüberliegende, gewickelte Joche 11 und einen einzigen Leistungstransistor 21, der in Reihe mit den Wicklungen dieser Joche liegt, und nur vier Rotorpole 121.

Die elektrische Schaltung entspricht der Fig. 6a, jedoch ohne die Bestandteile der Achse "X" (Joche 11X, Wicklung 112X, Transistor 21X). Die Dioden 22 und 23 sind nicht notwendig. Der Rotor dieses Motors weist zwei oder vier Rotorpositionierungsmagnete 4 auf, die diesen in die Anlaufstellung bringen, die der Stromleitungsphase des Transistors 21, bzw. der Rotorstellung entspricht, in der die Rotorpole 121 mit den Polen 111 der Joche 11 nicht übereinstimmen.

Diese Magnete können zum Zwecke der Ermittlung der Rotorstellung auch den Hallsensor 31 ansteuern und haben kleine Abmessungen, üben daher Kräfte, die im Vergleich zu der elektromagnetischen Magnetkraft, die auf dem Rotor 12 wirkt, gering sind.

### Funktionsweise:

Da die Positioniermagnete 4 unter den Polen der Joche 11 angezogen werden, so nimmt der Rotor die im vorherigen Abatz erwähnte Stellung.

Der Transistor 21 wird leitend, die Pole 111 der Joche 11 werden aufmagnetisiert und ziehen die naheliegendsten Rotorpole 121. Wenn die Rotorpole 121 mit den Außenpolen 111 fast übereinstimmen, wird einer der Magnete 4 vor dem Hallsensor 31 vorbeilaufen und dessen Logikzustand ändern, so daß die Wicklungen stromlos werden. Der Rotor bewegt sich unter dem Einfluß der Trägheit weiter, bis es zu einer Relativposition der Rotorpole 121 gegenüber den Polen der Joche 11, die der Ausgangsposition entspricht. Auf dem Weg zu dieser Stellung wird ein anderer Magnet 4 vor dem Hallsensor 31 vorbeilaufen und dessen logischen Zustand ändern, sodaß die beschriebenen Vorgänge sich wiederholen und der Motor arbeitet.

Wenn man weiter vereinfacht, so kann man einen Motor, ähnlich dem in Fig.9 dargestellten, bauen, jedoch mit nur einem gewickelten U-Joch, das zwischen den verlängerten U-Schenkeln Kreissegmente aufweist die als Pole 111 wirken, zwischen denen sich ein nur zweipoliger Rotor 121 dreht, wobei dieser intermittierend zweimal per Rotorumdrehung mit Nutzmomentwinkeln von ca. 90 Grad, die zwei Strompulsen entsprechen, betätigt wird.

Insbesondere bei Motoren für höhere Spannungspegel kann man anstelle der MOSFET- Transistoren 21 auch andere Halbleiter wie Thyristoren, (ggf. über den Gate abschaltbare, also GTO), Bipolartransistoren, u.s.w. verwenden, wobei die elektronische Steuerschaltung 2 wie vom Stand der Technik bekannt, angepaßt wird.

## Patentansprüche

1. Elektronisch kommutierter Motor,
dadurch gekennzeichnet,
daß ein Rotor (12) und ein Außenrotor (11, 1112, 113) vorgesehen sind, wobei Rotor (12) und Außenrotor (11, 112, 113) aus gewickelten Jochen (11) mit einem Träger (S) zusammengebaut sind und sich zum Erzeugen jeweils eines Teils der nutzbaren Motorleistung in entgegengesetzter Richtung drehen, wobei das Joch (11) in Axialrichtung einer zugeordneten Welle (52) an lediglich einer Seite mit der Welle (52) verbunden ist.

2. Elektronisch kommutierter Motor nach Anspruch 1,
dadurch gekennzeichnet,
daß an einem axial der Verbindungsstelle zwischen Joch (11) und Welle (52) gegenüberliegenden Ende der Welle (52) das Joch (11) an einem Haltering befestigt ist.

3. Motor nach Anspruch 1 oder 2,
dadurch gekennzeichnet,
daß der Träger (S) zwei Lager (541, 542) zur Lagerung einer Drehwelle (52) aufweist, wobei auf der Drehwelle (52) ein Außenrotorträger (5) für den gemeinsam mit der Drehwelle (52) drehbaren Außenrotor (11) befestigt ist und die Drehwelle (52) an ihren Extremitäten Bürsten (521+, 521-) zur Übertragung der von dem Motor benötigten Energie aufweist.

4. Motor nach Anspruch 3,
dadurch gekennzeichnet,
daß der Rotor (12) fluidische Verdrängerteile (641) aufweist und axial in das Innere des Außenrotors (11) bzw. des Außenrotorträgers (5) einsetzbar ist und mittels eines Lagers (543) gegenüber diesem drehbar ist.

5. Motor nach Anspruch 1,
dadurch gekennzeichnet,
daß sowohl der Rotor (12) als auch der Außenrotor (11) fluidische Verdrängerteile (64, 641) eines gegenläufigen Gebläses oder einer gegenläufigen Pumpe antreiben.

6. Motor nach Anspruch 1,
dadurch gekennzeichnet,
daß die Regelung der Leistung des Motors von einem feststehenden Teil aus ohne galvanischen Kontakt, insbesondere mittels optoelektronischer Mittel, oder durch Einwirkung über Magnetfelder auf die elektronischen, rotierenden Bausteine des Motors durchführbar ist.
